# EUROPÄISCHE PATENTSCHRIFT

(11) **EP 1 290 357 B1**
(45) Veröffentlichungstag und Bekanntmachung des Hinweises auf die Patenterteilung: **27.07.2005**
(21) Anmeldenummer: 01943402.6
(22) Anmeldetag: 18.05.2001
(51) Int. Cl.: F16G 5/16

(54) **KEILRIEMEN ZUR VERLUSTARMEN LEISTUNGSÜBERTRAGUNG**
V-BELT FOR POWER TRANSMISSION WITH NEGLIGIBLE LOSSES
COURROIE TRAPEZOIDALE POUR UNE TRANSMISSION DE FORCE A PERTES FAIBLES

(30) Priorität: 02.06.2000 DE 10026878
(43) Veröffentlichungstag der Anmeldung: 12.03.2003
(73) Patentinhaber: ContiTech Antriebssysteme GmbH, 30165 Hannover (DE)
(72) Erfinder: SATTLER, Heiko, 30175 Hannover (DE)
(74) Vertreter: Finger, Karsten (DE)
(86) Internationale Anmeldenummer: PCT/EP2001/005697
(87) Internationale Veröffentlichungsnummer: WO 2001/092756

(56) Entgegenhaltungen:
- EP-A- 0 918 173
- EP-B- 0 135 710
- EP-B- 0 213 627
- PATENT ABSTRACTS OF JAPAN vol. 017, no. 139 (M-1385), 22. März 1993 (1993-03-22) -& JP 04 316747 A (BANDO CHEM IND LTD), 9. November 1992 (1992-11-09)
- PATENT ABSTRACTS OF JAPAN vol. 010, no. 286 (M-521), 27. September 1986 (1986-09-27) -& JP 61 103030 A (HONDA MOTOR CO LTD), 21. Mai 1986 (1986-05-21)
- PATENT ABSTRACTS OF JAPAN vol. 010, no. 286 (M-521), 27. September 1986 (1986-09-27) -& JP 61 103027 A (HONDA MOTOR CO LTD), 21. Mai 1986 (1986-05-21)

## Beschreibung

Eine stufenlose Drehzahl- und Drehmomentwandlung erfordert insbesondere bei automobilen Anwendungen hohe Übertragungswirkungsgrade.
Bisher bekannte Riemenanordnungen zur Transmission von Drehbewegungen zwischen (mindestens) zwei Riemenscheiben bestehen aus zwei endlosen Lastträgern und einer Vielzahl darauf angebrachter Blöcke (siehe z. B. EP 0 135 710 B1, EP 0 213 627 B1 und EP 0 918 173 A1). Bei den vorbekannten Riemenanordnungen sind die Lastträger in Schlitze eingepasst, die von geneigten Seitenflächen der Blöcke gegen deren mittleren Bereich verlaufen. Sowohl die Lastträger als auch die sie aufnehmenden Schlitze weisen konvexe oder konkave Abschnitte auf, wodurch sich eine in Längsrichtung der Lastträger relativ unbewegliche Ineingriffnahme ergibt. Mit Hilfe der auf Lastträgern und Blöcken quer zur Laufrichtung angeordneten, konvexen oder konkaven Abschnitte wird eine Synchronität zwischen der Fortbewegung der Lastträger und der Blöcke erzielt.

Systembedingt treten in reibschlüssig arbeitenden Keilriementrieben an der Antriebs- und Abtriebsseite unterschiedliche Laufradien auf. Dadurch entstehen im Riemenkörper während des Betriebs Krümmungs- und Spannungswechsel.

Die Zugmittel in solchen reibschlüssig arbeitenden Keilriemen sind zur Erzeugung der gewünschten Reibkräfte auf den Kontaktflanken auf Normalkräfte angewiesen, die jedoch zu elastischen und plastischen Querverformungen der im Kontakt zu den Kegelscheiben befindlichen Teile der Zugmittel führen. In den freien Trumen herrschen die genannten Normalkräfte nicht, so dass beim Einlauf in den Scheibenkeil ein Übergang vom ungestauchten zum gestauchten Zustand mit einem sogenannten Einlaufstoß stattfindet.

Die Übergangsphase für den betreffenden Teil eines Riemens beginnt, wenn dieser ungestauchte Teil eines Riemens im noch gestreckten Trum mit den rotierenden Kegelscheiben an den dem Drehzentrum zugewandten Enden seiner seitlichen Kontaktflächen in Berührung kommt. Im Kontaktpunkt ist die vektorielle Geschwindigkeitskomponente aus der Scheibenrotation parallel zum gestreckten Trum kleiner als die translatorische Riemengeschwindigkeit. Senkrecht zum gestreckten Trum ist eine vom Drehzentrum nach außen weisende Komponente vorhanden. Aufgrund der Differenz zwischen der vektoriellen Geschwindigkeit im freien Trum und der Geschwindigkeit der Scheibe kommt es im Kontaktpunkt zu einer Relativgeschwindigkeit zwischen den berührenden Stellen des Riemens und der Scheibe, der eine Reibkraft entgegengerichtet ist.

Besonders bei Riemenformen mit höherem Querschnitt und verstärkenden Stützblöcken übt die außen am Riemen, typischerweise an den Enden von Stützblöcken auftretende Reibkraft auf ein Element oder den Riemen ein Drehmoment aus, dessen Drehsinn der Winkelgeschwindigkeit und einer Anpassung an die Krümmung im Verlauf des weiteren Kontaktbogens gleichgerichtet ist und dem durch die äußere Kontur am Lastträger Kräfte entgegengesetzt werden.

In bekannten Ausführungen sind bis auf die JP-A-4 316 747, die dem Oberbegriff des Anspruchs 1 entspricht, die Konturen am Lastträger, die auch Stützblöcke gegenüber dem Lastträger führen, - bei alternierenden und gleichbleibenden Teilungsfolgen gleichermaßen - mit den zugeordneten Maxima ihrer Höhen und Tiefen einander gegenüberliegend angeordnet, so dass die äußere Kontur die oben beschriebene Kippneigung durch Kräfte behindert.

Die mit Anspruch 1 gelöste Aufgabe der Erfindung besteht im wesentlichen darin, die Beanspruchung des Lastträgers und der Stützblöcke zu mindern.
Es sollen der Einlaufstoß beim Setzen des Riemens im Scheibenkeil gemildert und weiterhin die damit verbundenen Geräuschemissionen herabgesetzt werden.
In diesem Zusammenhang werden für eine bevorzugte Laufrichtung insbesondere durch Unterstützung eines evolventenartigen Einlaufens Zwangskräfte auf einen Riemenabschnitt und damit Spannungs- und Dehnungsspitzen während der Leistungsübertragung minimiert.

Erfindungsgemäß werden die als "Schlitzbegrenzungswölbungen" bezeichneten, oben und unten auf den Schlitzflanken angeordneten Erhebungen und Vertiefungen zueinander versetzt angeordnet. D. h.: In Laufrichtung des Riemens ist die größte Erhebung der radial äußeren Kontaktfläche von Stützblock und Lastträger nach innen gegenüber der größten Erhebung der radial inneren Kontaktfläche nach außen etwas voreilend eingestellt. Die ein Stützblock auf der Außenseite des Lastträgers führende Kontur wird gegenüber der auf der Innenseite um bis zu einer halben mittleren Teilung in der bevorzugten Laufrichtung vorversetzt, so dass die voreilende äußere Kontur die Kippbewegung zur Aufnahme einer stärkeren Krümmung unterstutzt. Mit dieser Maßnahme werden der Einlaufstoß beim Setzen des Riemens im Scheibenkeil gemildert und damit das Geräuschverhalten verbessert sowie die Materialbeanspruchung und die Verluste beim Einlaufen herabgesetzt.

Die vorteilhafte Wirkung des erfindungsgemäßen Versatzes erklärt sich folgendermaßen: Der gesamte Riemen erfährt bei Einlauf in die Keilriemenscheibe einen Einlaufstoß aufgrund der axialen Spannkraft der Riemenscheiben. Da die dem Drehzentrum zugewandten Enden der seitlichen Riemenflanken an der Innenseite des Riemens auf einem kleineren Radius zuerst mit den Kegelscheiben in Kontakt treten, kommt es zu einem ungleichmäßigen Eingriff, wenn die Stellen größter Vertiefung der radial äußeren und inneren Kontaktflächen am Lastträger einander gegenüberliegend angeordnet sind. Wird der Ort der größten radial äußeren Vertiefung in Laufrichtung voreilend versetzt, kommt es zu einer vorteilhaften Unterstützung der Kippbewegung durch den schon in der Krümmung befindlichen Lastträger, die sonst erst durch Kontakt der inneren seitlichen Riemenflanken stoßartig eingeleitet wird. Mit dem Attribut "mittlere Teilung" soll zum Ausdruck kommen, dass diese technische Aussage auch für Riemen gilt, die aus Geräuschgründen mit ungleichmäßiger Teilung ausgeführt sind.

An in Riemenlaufrichtung Vorder- und Rückseite der Stützblöcke sind entsprechend dem Versatz in Riemenlängsrichtung unterschiedliche Anschrägungen ausgeführt. Diese Unterschiedlichkeit wird derart eingestellt, dass die in Laufrichtung hintere Seite, die Rückseite, eine stärkere Neigung gegen den Radialstrahl erhält als die Vorderseite und somit die Kippbewegung eines Stützblockes in einer Kegelscheibe nicht behindert wird.

Im folgenden wird die erfindungsgemäße Verwendung einer Keilriemenanordnung anhand der beigefügten Zeichnungen näher erläutert. Es zeigt:
Fig. 1 einen Stützblock in Frontansicht aus Riemenlängsrichtung;
Fig. 2 einen solchen Stützblock, ebenfalls in Frontansicht aus Riemenlängsrichtung, mit eingelegtem - im Querschnitt dargestellten - Lastträger;
Fig. 3 eine alternative Ausführungsform eines Stützblocks in Frontansicht aus Riemenlängsrichtung;
Fig. 4 einen Stützblock gemäß Fig. 3, mit zwei eingelegten - im Querschnitt dargestellten - Lastträgern;
Fig. 5 eine axiale (Seiten-)Ansicht mit drei Stützblöcken und einem entsprechenden Abschnitt eines eingelegten Lastträgers, im gekrümmten Zustand; und
Fig. 6 die vergrößerte axiale (Seiten-)Ansicht mit fünf Stützblöcken, im gestreckten Zustand, der Erfindung.

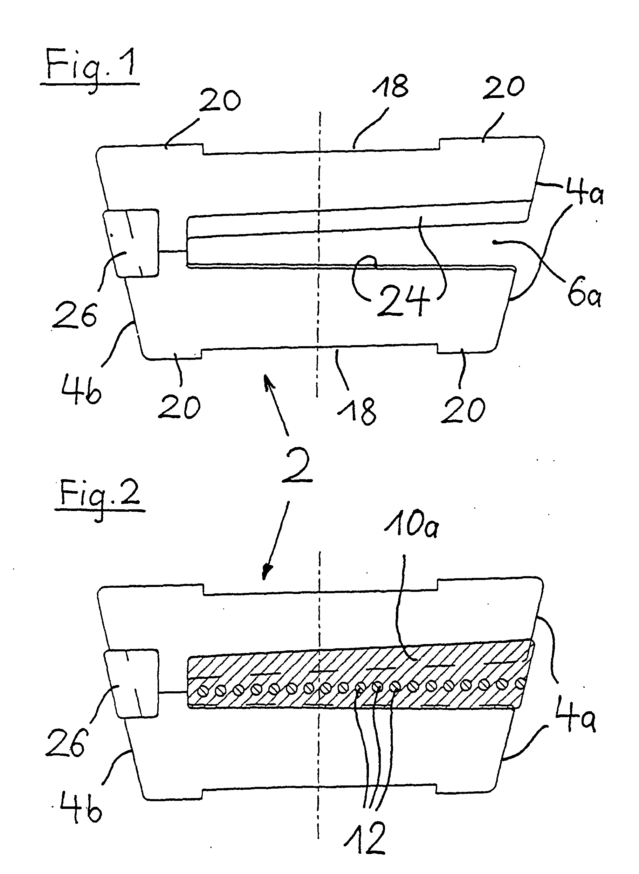

Die in Fig. 1 dargestellte bevorzugte Ausführungsform eines Stützblockes 2 weist in etwa einen trapezförmigen Querschnitt auf. Dabei sind zwei sich gegenüberstehende Seitenflächen 4a, 4b in der Weise zueinander geneigt, dass sie zu den Flanken einer (nicht dargestellten) Riemenscheibe korrespondieren. In eine 4a dieser sich gegenüberstehenden Seitenflächen 4a, 4b ist ein Schlitz 6a (Begrenzungsflächen des Schlitzes 24) eingebracht. Dieser Schlitz 6a verläuft - sich konisch verjüngend - von der einen Seitenfläche 4a in Richtung auf die gegenüberliegende Seitenfläche 4b. Zur Handhabung der (Keil-)Riemenanordnung und zur Gewichtsersparnis sind an dem Stützblock 2 Aussparungen 18 (Erhebungen 20) vorgesehen.

Wie die Fig. 2 zeigt, besteht die Keilriemenanordnung aus (wenigstens) einem Lastträger 10a und darauf angeordneten Stützblöcken 2. Während der Lastträger 10a im wesentlichen aus Elastomerkörper, Zugsträngen 12 und evtl. Deckgewebe besteht, sind die Stützblöcke 2 aus einem Material höheren Verformungswiderstandes als der Lastträger, vorzugsweise aus Aluminium hergestellt.

Wie aus Fig. 2 weiter hervorgeht, ist die der eingeschlitzten Seitenfläche 4a gegenüberliegende Seitenfläche 4b mit einem Reibbelag 2b versehen. Der in den Schlitz 6a eingebrachte Lastträger 10a ragt etwas über die Öffnung des Schlitzes 6a hinaus.
In den aus Elastomer bestehenden Lastträger 10a sind schraubenförmig gewickelte oder endlose Zugstränge 12 aus Metall, Glasfasern, Polyester, Aramid oder gedrillten Einzelkorden aus denselben Materialien eingebettet.

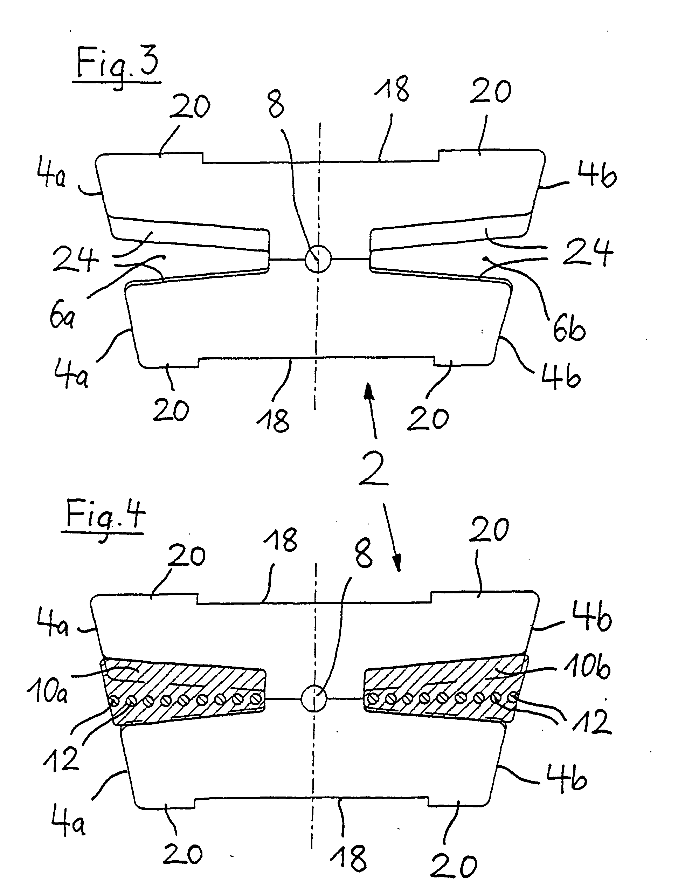

Die in Fig. 3 dargestellte alternative Ausführungsform eines Stützblockes 2 weist ebenfalls in etwa einen trapezförmigen Querschnitt auf. Auch hier sind zwei sich gegenüberstehende Seitenflächen 4a, 4b in der Weise zueinander geneigt, dass sie zu den Flanken einer (nicht dargestellten) Riemenscheibe korrespondieren.
In diese sich gegenüberstehenden Seitenflächen 4a, 4b ist jeweils ein Schlitz 6a, 6b eingebracht. Diese beiden Schlitze 6a, 6b verlaufen - sich konisch verjüngend - von den Seitenflächen 4a, 4b in Richtung auf den mittleren Bereich des Blockes 2. Die Flanken (Begrenzungsflächen) des Schlitzes 6a bzw. 6b sind mit der Ziffer 24 bezeichnet.

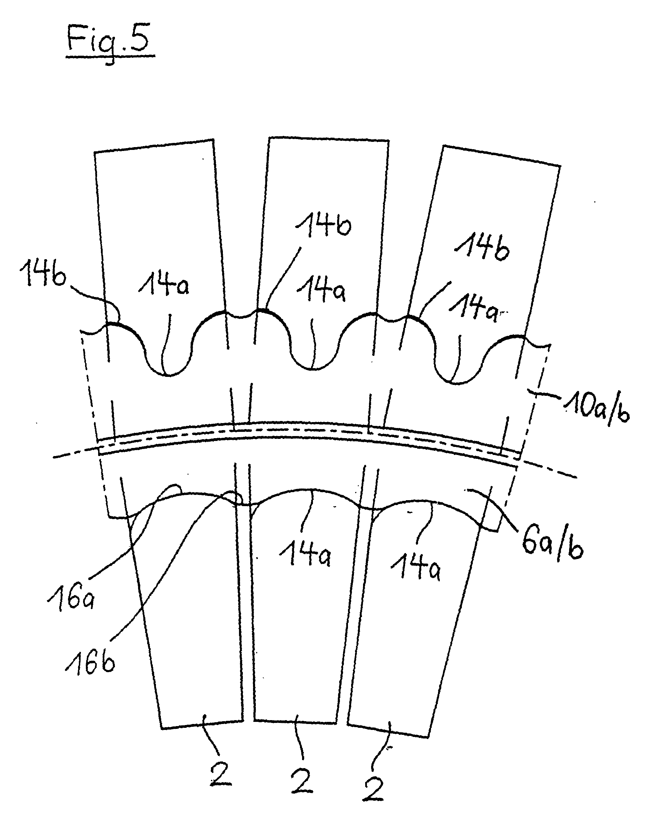

Die Fig. 4 zeigt ebenfalls einen alternativen Stützblock 2. In dieser Darstellung sind in den seitlichen Schlitzen 6a, 6b Lastträger 10a, 10b eingelegt.

Die Fig. 5 zeigt ausschnittsweise eine Ansicht in axialer Richtung. Daraus geht hervor, dass sowohl die Schlitze, 6a, 6b der Blöcke 2 als auch die darin eingelegten Lastträger 10a, 10b mit konkaven und konvexen Abschnitten 14, 16 versehen sind, wobei jeweils ein konvexer Abschnitt 14a eines Block-Schlitzes 6a bzw. 6b mit einem konkaven Abschnitt 16a des Lastträgers 10a bzw. 10b in Eingriff steht und umgekehrt: ein konkaver Abschnitt 14b eines Block-Schlitzes 6a bzw. 6b mit einem konvexen Abschnitt 16b des Lastträgers 10a bzw. 10b.

Die hier gezeigte Ausführung weist im wesentlicheren Bereich der Blockmitte konvexe Abschnitte 14a an der oberen und unteren Begrenzungsfläche 24 (siehe Fig. 1 und 3) des Blockschlitzes 6a und/oder 6b auf, weitere mögliche, nicht dargestellte Ausführungen weisen in der Blockmitte zwei konkave Begrenzungsflächen des Blockschlitzes oder oben eine konvexe kombiniert mit einer konkaven Begrenzungsfläche unten oder oben eine konkave kombiniert mit einer konvexen Begrenzungsfläche des Blockschlitzes unten mit ihren jeweiligen Gegenformen am Lastträger auf.

Diese Unterschiedlichkeit wird derart eingestellt, dass die in Laufrichtung hintere Seite, die Rückseite, eine stärkere Neigung gegen den Radialstrahl erhält als die Vorderseite und somit die Kippbewegung eines Stützblockes 2 in einer Kegelscheibe nicht behindert wird. Die Blöcke 2 sind so gestaltet, dass sich die inneren Enden benachbarter Blöcke 2 auch bei einer Umschlingung um eine zugeordnete Riemenscheibe auf kleinstmöglichem Laufradius nicht berühren.

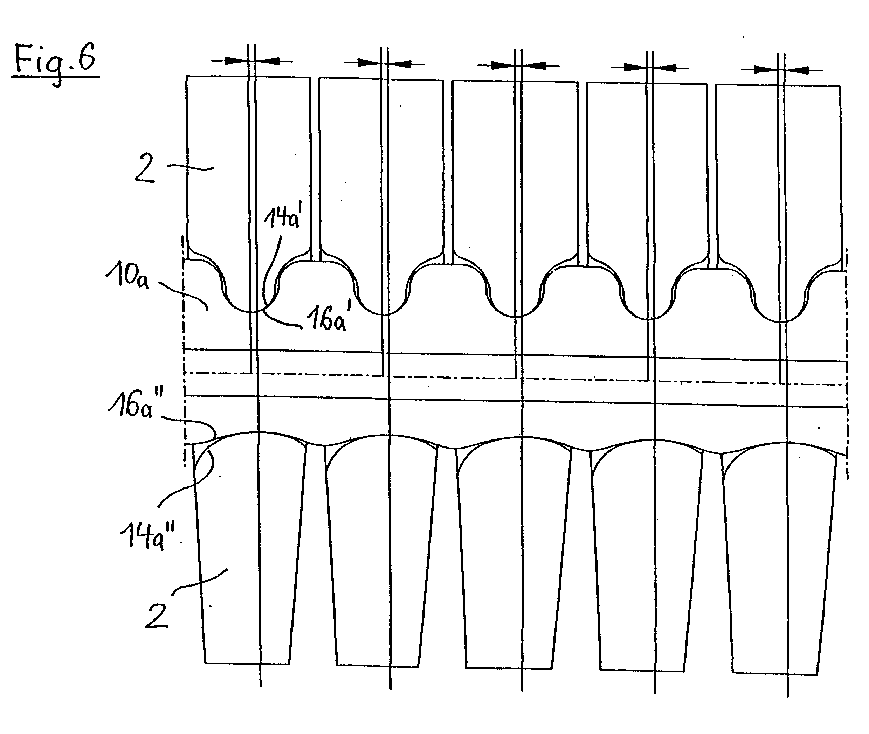

Aus der in Fig. 6 vergrößerten Darstellung der Seitenansicht des aus fünf Stützblöcken 2 nebst zugehörigem Lastträger 10a bestehenden Riemenabschnitts ist ersichtlich, dass die in dieser Ausführung größte Erhebung, der "oberen" konvexen Krümmung 14a' gegenüber der "unteren" 14a'' im mittleren Bereich der Stützblöcke 2 seitlich verschoben ist, wodurch sich ein Voreilen der "oberen" Teilung gegenüber der "unteren" ergibt. Die zu der "oberen" 14a' und "unteren" konvexen Krümmung 14a'' der (Blockschlitz-)Flanken 24 korrespondierenden "oberen" und "unteren" Krümmung des Lastträgers 10a sind mit 16a' bzw. 16a'' bezeichnet.
An in Riemenlaufrichtung Vorder- und Rückseite der Stützblöcke 2 sind entsprechend dem Versatz in Längsrichtung unterschiedliche Anschrägungen ausgeführt.

### Bezugszeichenliste

- 2: Block, Querblock, Stützblock, Stützelement, Stützglied
- 4a, 4b: Seitenflächen, Kontaktflächen
- 6a, 6b: Schlitze, Blockschlitze, Aufnahmeschlitze
- 10a, 10b: Lastträger, Lastband
- 14, 16: konkave und konvexe Abschnitte
- 14a: konvexer Abschnitt eines Block-Schlitzes
- 14b: konkaver Abschnitt eines Block-Schlitzes
- 16a: konkaver Abschnitt eines Lastträgers
- 16b: konvexer Abschnitt eines Lastträgers
- 14a': "obere" konvexe Krümmung (Erhebung) des Block-Schlitzes
- 14a'': "untere" konvexe Krümmung (Erhebung) des Block-Schlitzes
- 16a': "obere" konkave Krümmung des Lastträgers
- 16a'': "untere" konkave Krümmung des Lastträgers
- 24: (Schlitz-)Flanke, Begrenzungsfläche des Schlitzes
- 26: Reibbelag

## Patentansprüche

1. Verwendung einen Keilriemenanordnung mit folgenden Merkmalen:
1.1 Er besteht aus mindestens einem Lastträger (10a und/oder 10b) und
1.2 einer Vielzahl von Querblöcken (2);
1.3 Querblöcke (2) und Lastträger (10a, 10b) stehen in Längsrichtung des mindestens einen Lastträgers (10a und/oder 10b) relativ unbeweglich in Eingriff;
1.1.1 der mindestens eine Lastträger (10a und/oder 10b) besteht im wesentlichen aus Elastomerkörper, Zugsträngen (12) und evtl. Deckgewebe;
1.2.1 jeder Querblock (2) weist geneigte Seitenflächen (4a, 4b) auf;
1.2.1.1 die Neigung der Seitenflächen (4a, 4b) ist der Rille der Riemenscheibe angepasst;
1.2.2 in den Querblöcken (2) ist jeweils mindestens ein Schlitz (6a und/oder 6b) zur Aufnahme des mindestens einen Lastträgers (10a und/oder 10b) eingebracht;
1.2.2.1 der mindestens eine Schlitz (6a und/oder 6b) verläuft von einer Seitenfläche (4a und/oder 4b) gegen den mittleren Bereich des jeweiligen Blockes (2);
1.3.1 der jeweilige Querblock (2) und der mindestens eine Lastträger (10a und/oder 10b) sind in der Eingriffsstellung in Längsrichtung unbeweglich und gleichzeitig in Querrichtung lösbar miteinander verbunden; 1.3.3 mindestens ein Lastträger (10a und/oder 10b) auf mindestens einer seiner Oberflächen, und
1.3.4 die Blockschlitze (6a und/oder 6b) an mindestens einer ihrer Flanken (24) sind mit konvexen (16b, 14a) und/oder konkaven Abschnitten (16a, 14b) versehen;
1.3.5 die Abschnitte (14a, 14b) der Schlitzflanken (24) kommen in Eingriff mit den konkaven oder konvexen Abschnitten (16a, 16b) des mindestens einen Lastträgers (10a und/oder 10b);
1.3.6 die oben und unten an den Flanken (24) der Blockschlitze (6a, 6b) angebrachten konvexe und/oder konkaven Abschnitte (14a, 14b) sind zueinander versetzt angeordnet, **dadurch gekennzeichnet, daß** in Laufrichtung des Riemens die größte Ausdehnung der oberen Erhebung (14a')(bzw. Vertiefung) gegenüber der unteren Erhebung (14a'') (bzw. Vertiefung) des Aufnahmeschlitzes (6a bzw. 6b) etwas voreilend eingestellt ist.

2. Verwendung einer Keilriemenanordnung nach Anspruch 1,
**dadurch gekennzeichnet, ,**
**dass** an in Riemenlaufrichtung Vorder- und Rückseite der Stützblöcke (2) entsprechend dem Versatz in Längsrichtung unterschiedliche Anschrägungen ausgeführt sind.

## Claims

1. Use of a V-belt assembly with the following features:
1.1 it has at least one load-bearing element (10a and/or 10b) and
1.2 a multiplicity of transverse blocks (2);
1.3 the transverse blocks (2) and the load-bearing element (10a, 10b) engaging relatively immovably in the longitudinal direction of the at least one load-bearing element (10a and/or 10b);
1.1.1 the at least one load-bearing element (10a and/or 10b) essentially comprises elastomer bodies, tension cables (12) and possibly a covering fabric;
1.2.1 each transverse block (2) has inclined side faces (4a, 4b);
1.2.1.1 inclination of the side faces (4a, 4b) is adapted to the groove of the belt pulley;
1.2.2 at least one slot (6a and/or 6b) for receiving the at least one load-bearing element (10a and/or 10b) is respectively made in the transverse blocks (2);
1.2.2.1 the at least one slot (6a and/or 6b) runs from a side face (4a and/or 4b) towards the central region of the respective block (2);
1.3.1 in the engagement position, the respective transverse block (2) and the at least one load-bearing element (10a and/or 10b) are immovable in the longitudinal direction and at the same time releasably connected to one another in the transverse direction;
1.3.3 at least one load-bearing element (10a and/or 10b) on at least one of its surfaces, and
1.3.4 the block slots (6a and/or 6b) on at least one of its flanks (24) are provided with convex portions (16b, 14a) and/or concave portions (16a, 14b);
1.3.5 the portions (14a, 14b) of the slot flanks (24) come into engagement with the concave or convex portions (16a, 16b) of the at least one load-bearing element (10a and/or 10b);
1.3.6 the convex and/or concave portions (14a, 14b) provided at the top and bottom of the flanks (24) of the block slots (6a, 6b) are arranged offset in relation to one another, **characterized in that** the greatest extent of the upper elevation (14a') (or depression) is set slightly ahead of the lower elevation (14a'') (or depression) of the receiving slot (6a or 6b) in the running direction of the belt.

2. Use of a V-belt assembly according to Claim 1, **characterized in that**, on the front and rear sides of the supporting blocks (2) in the belt running direction, different bevels are formed in a way corresponding to the offset in the longitudinal direction.

## Revendications

1. Utilisation d'une courroie trapézoïdale ayant les caractéristiques suivantes :
1.1 elle se compose d'au moins un support de charge (10a et/ou 10b) et
1.2 d'une pluralité de blocs transversaux (2) ;
1.3 les blocs transversaux (2) et les supports de charge (10a, 10b) sont en prise de manière relativement immuable dans la direction longitudinale de l'au moins un support de charge (10a et/ou 10b) ;
1.1.1 l'au moins un support de charge (10a et/ou 10b) se compose essentiellement de câbles de traction en corps élastomère (12) et éventuellement de toiles de recouvrement ;
1.2.1 chaque bloc transversal (2) présente des faces latérales inclinées (4a, 4b) ;
1.2.1.1 l'inclinaison des faces latérales (4a, 4b) est adaptée à la gorge de la poulie à courroie ;
1.2.2 au moins une fente (6a et/ou 6b) pour recevoir l'au moins un support de charge (10a et/ou 10b) est pratiquée à chaque fois dans les blocs transversaux (2) ;
1.2.2.1 l'au moins une fente (6a et/ou 6b) s'étend depuis une face latérale (4a et/ou 4b) vers la région centrale du bloc respectif (2) ;
1.3.1 le bloc transversal respectif (2) et l'au moins un support de charge (10a et/ou 10b) sont reliés de manière immuable dans la direction longitudinale dans la position d'engagement et en même temps de manière détachable dans la direction transversale ;
1.3.3 au moins un support de charge (10a et/ou 10b), sur au moins l'une de ses surfaces, et
1.3.4 les fentes des blocs (6a et/ou 6b), sur au moins l'un de leurs flancs (24), sont pourvus de portions convexes (16b, 14a) et/ou concaves (16a, 14b) ;
1.3.5 les portions (14a, 14b) des flancs des fentes (24) viennent en prise avec les portions concaves ou convexes (16a, 16b) de l'au moins un support de charge (10a et/ou 10b) ;
1.3.6 les portions convexes et/ou concaves (14a, 14b) prévues en haut et en bas sur les flancs (24) des fentes des blocs (6a, 6b) sont disposées de manière décalées les unes par rapport aux autres,
**caractérisée en ce que**
dans la direction d'avance de la courroie, la plus grande extension du rehaussement supérieur (14a') (respectivement renfoncement) par rapport au rehaussement inférieur (14a") (respectivement renfoncement) de la fente de réception (6a, respectivement 6b), est ajustée avec un peu d'avance.

2. Utilisation d'une courroie trapézoïdale selon la revendication 1,
**caractérisée en ce que**
des biseautages différents sont réalisés sur les côtés avant et arrière, dans la direction d'avance de la courroie, des blocs de support (2), de manière correspondant au décalage dans la direction longitudinale.
